# EUROPEAN PATENT SPECIFICATION

(11) **EP 0 506 885 B1**
(45) Date of publication and mention of the grant of the patent: **11.02.1998**
(21) Application number: 91903158.3
(22) Date of filing: 20.12.1990
(51) Int. Cl.: C05G 3/04

(54) **METALLIC PEROXIDES WITH PHOSPHATES AS SUPPLEMENTS FOR PLANTS**
METALLPEROXIDE MIT PHOSPHATEN ALS ZUSÄTZE FÜR PFLANZEN
PEROXYDES METALLIQUES COMPRENANT DES PHOSPHATES COMME COMPLEMENTS POUR LES PLANTES

(30) Priority: 22.12.1989 US 455165
(43) Date of publication of application: 07.10.1992
(73) Proprietor: PLANT RESEARCH LABORATORIES, INC., Corona del Mar, CA 92625 (US)
(72) Inventor: FARONE, William, A., Irvine, CA 92714 (US)
(74) Representative: VOSSIUS & PARTNER
(86) International application number: US9007573
(87) International publication number: WO9109821

(56) References cited:
- DE-A- 3 031 485
- US-A- 4 470 839

## Description

### BACKGROUND OF THE INVENTION

### Field of the Invention:

This invention relates to the use of certain metal peroxides, and mixtures of these metal peroxides with phosphates or surfactants, or both, as agents which release oxygen to the soil. This invention also relates to a method of making these metal peroxide mixtures, and using the metal peroxides or metal peroxide/phosphate/surfactant mixtures by directly applying to the soil or blending with plant nutrients and then applying to the soil. It also relates to using effective amounts of metals as bioactive agents for suppressing or enhancing the activity of microorganisms in the soil depending on whether such microorganisms are detrimental or beneficial to plants.

### Background Discussion:

In U.S. Patent No. 3,912,490, Malcolm B. Boghosian discusses the use of urea peroxide and hydrogen peroxide as supplements to fertilizers which release oxygen to the soil. The Boghosian composition is an aqueous solution containing urea peroxide or hydrogen peroxide. This solution is applied to the soil or other media in which the plant grows and it penetrates the soil, releasing oxygen to the root zone. This oxygen treatment improves plant appearance and prevents injury to the plant due to over watering.

The Boghosian supplement may include nitrogen, phosphorus and potassium in the appropriate ratios and concentrations as required by the particular plant being fertilized. The nitrogen, potassium, and phosphorus are macronutrients. The application of nutrients is controlled by the amount in the fertilizer formulation and the rate at which the fertilizer is applied through mixing with water. The aqueous Boghosian formulation is limited to low amounts of included macronutrients, requiring the use of large dosages to apply a high level of macronutrients to the soil. Also micronutrients can not be added to the Boghosian supplement.

Calcium peroxide has also been used as a supplement for growing potatoes. The calcium is believed to be beneficial for potatoes and oxygen is released to the root zone. Interox Chemicals, Ltd of Warrington, United Kingdom, sells a product Fertilox containing calcium peroxide which is used as a plant supplement.

US-A-4,470,839 discloses the production of solid particles containing calcium peroxide which are coated with a coating agent consisting of 30 % to 100 % by weight of condensed phosphates or polyphosphates. It is disclosed that the particles are coated by spraying a solution containing the coating agent onto moving particles of metal peroxide. This requires the use of one of several manufacturing techniques, such as use of a fluidised bed, a rotating floor, or a rotating drum. Thus, US-A-4,470,839 teaches that a special technique for application of polyphosphate to metal peroxide particles is required in order to obtain the benefits therefrom.

In general, it is known that trace amounts of certain metals are useful in fertilizers because they become incorporated in the plant cells as part of the plant's enzyme systems. Care, however, must be taken to avoid a build up of toxic levels of such metals in the plants.

### SUMMARY OF THE INVENTION

There are several features of this invention, no single one of which is solely responsible for its desirable attributes. Without limiting the scope of this invention as expressed by the claims, its more prominent features will now be discussed briefly. After considering this discussion, and particularly after reading the section of the application entitled "DETAILED DESCRIPTION OF PREFERRED EMBODIMENTS," one will understand how the features of this invention provide its advantages.

The first feature of this invention is that it is a dry powder rather than a liquid.

The second feature is that this invention releases more oxygen over a longer period of time than the Boghosian supplement.

The third feature of this invention is that it includes a surfactant which improves germination of seeds and distribution of fertilizer, water and oxygen in the growth media.

The forth feature is that it preferably includes magnesium peroxide, which leaves in the soil a harmless, and sometimes helpful, residue of magnesium oxide.

The fifth feature of this invention is that macronutrients may be blended with the metal peroxides to provide fertilizers with high N-P-K values.

The sixth feature of this invention is that micronutrients may be blended with the metal peroxides and macronutrients to provide fertilizers including both peroxides and micronutrients.

The seventh feature of this invention is that trace metals may be blended with the metal peroxides, or a mixture of the metal peroxides and macronutrients, to provide a composition for application to soil which suppress the growth of microorganisms that are detrimental to plants and enhances the growth of microorganisms that are beneficial to plants.

### General Discussion:

The present invention is in particular based upon the fact that calcium peroxide, potassium peroxide, and magnesium peroxide are better oxygen release agents than the urea peroxide and hydrogen peroxide used by Boghosian. These metal peroxides may be applied directly to the soil either in dry powder form or dispersed in water, dissolved or dispersed in water and applied to seeds prior to planting, or compounded with nutrients to provide a fertilizer having an active amount of the calcium peroxide, potassium peroxide, magnesium peroxide, or mixtures thereof. The Boghosian supplement requires that the formulation be a liquid. In contrast, the fertilizer of this invention is a dry, granular material which can be applied directly to the soil in the dry form or dissolved or dispersed in water and then applied to the soil. When the metal peroxide is dispersed or dissolved in water, its particle size is controlled so that it ranges between about 80 and 400 mesh. This makes it easy to disperse. In accordance with this invention, a sufficient quantity of the metal peroxide is used so that when applied to the soil an effective amount of atomic oxygen is released to offset the negative effects of excessive water and enhance plant growth and appearance. Typically, at least 15 milligrams of atomic oxygen per gram of fertilizer is released to the soil.

Although calcium, potassium and magnesium peroxides have all been found useful, these three compounds are not equivalent. Of these three metal peroxides, magnesium peroxide (MgO₂) is preferred. It has greater stability, simplifying storage and handling. It increases pH only slightly, avoiding making soils too basic even if a large quantity is employed. It is non-toxic (when trace amounts of magnesium become absorbed by the plant this would be useful in cell wall biochemistry of the plant). It delivers the most oxygen per unit weight. Any magnesium oxide left after release of the oxygen is benign to humans, animals and the environment, and does not create a problem due to overabundance in potted plants.

Although calcium and potassium peroxide are useful, they do not provide the same advantages as the magnesium peroxide. The calcium peroxide has a higher basicity than the magnesium peroxide and may be undesirable for use in many soils. It also leaves a chalk residue and tends to bind up micronutrients. The potassium peroxide is corrosive and difficult to handle for this reason. It strongly increases pH it is a strong irritant, and releases oxygen very quickly.

The rate at which the metal peroxides will release oxygen to the soil may be inhibited by including phosphate ion (PO₄) in the formulation. This is highly desirable in order to provide the benefits of oxygenation over a longer time interval. When phosphate is added, it takes a substantially longer period of time for the metal peroxide to decompose to release the oxygen. In many instances, this is highly desirable. The amount of phosphate used varies depending on the desired characteristics sought to be achieved, but generally from about 0.03 to about 1.60 grams of phosphate compound is used per gram of metal peroxide. For calcium peroxide, from about 0.03 to about 1.23 of phosphate per gram of calcium peroxide is used. And for potassium peroxide, from about 0.03 to about 0.80 of phosphate per gram of potassium peroxide is used. The preferred sources of the phosphate ion are potassium dihydrogen phosphate, dipotassium hydrogen phosphate, urea phosphate, monoammonium phosphate, and diammonium phosphate.

Excluded for the use as phosphate ion source for the preparation of the fertilizers according to the invention are condensed phosphates, i.e. phosphates having at least one sequence of phosphorus- oxygen-phosphorus linkages in the molecule.

It is also desirable in some instances to use a surfactant with the metal peroxides. The surfactant improves germination of seeds. Typically, from about 0.005 to about 0.010 grams of surfactant is used per gram of metal peroxide. The surfactant is also desirable because it increases the dispersability of the metal peroxide in water and in the soil upon application. Surfactants which are non-toxic to plants have been found useful in germinating seeds, for example, U.S. Patent No. 4,171,968 discloses alcohol ethoxylate sulfates, acyl taurides, and ethoxylated alcohols. Specifically,
(a) long chain alcohol ethoxylate sulfates of the formula

   RO - (CH₂CH₂O) -ₙ SO₃Na

   where R is about C₁₂ to C₁₈ and n is no greater than about 9 to 10;
(b) long chain acyl taurides of the formula

   RCON(CH₃)C₂H₄SO₃Na

   where R is about C₁₄ to C₂₀; and
(c) long chain ethoxylated alcohols of the formula

   RO - (CH₂CH₂O) -ₙ H

   where R is about C₁₄ to C₂₀ and n is no greater than about 9 to 10.
Other compounds are also suitable surfactants. These include, for example, monolaurate, monopalmitate, monostearate, and monooleate esters of sorbitol, or mixtures thereof, either with or without ethoxylation. These compounds are sold by ICI America under the brand names of Tween and Span.

The fertilizer of this invention includes the macronutrient nitrogen (N), phosphorus (P), and potassium (K). The nitrogen, expressed as atomic nitrogen, is present in the range from about 1 to about 35 weight percent. The phosphorus, expressed as phosphorus pentoxide (P₂O₅), is present in the range from about 1 to about 35 weight percent. The potassium, expressed as potassium oxide (K₂O), is present in the range from about 1 to about 35 weight percent. The ratio of nitrogen, phosphorus, and potassium varies depending upon the application. In accordance with one feature of this invention, a fertilizer is provided including high levels of nitrogen, potassium and phosphorus and a metal peroxide. For example, fertilizers with an N-K-P value in excess of 15:15:15 are readily achievable utilizing metal peroxides. The calcium peroxide, magnesium peroxide, potassium peroxide, or mixtures thereof, are present in an amount ranging from about 5 to about 60 weight percent. The fertilizer of this invention may also include micronutrients such as trace amounts of iron, copper, molybdenum, and other ingredients known to be beneficial to plants. Typically, these micronutrients are in amounts ranging from about 0 to about 5 weight percent, preferably 0.1 to 2.0 weight percent. In a preferred fertilizer formulation the N-P-K ratio is 20:15:15 for general application.

The plant supplements of this invention may also include small, but effective amounts of metals. Suitable metals are selected from the group consisting of zinc, copper, molybdenum, boron, selenium, cobalt, aluminum, manganese, iron, and nickel. Such metals are bioactive agents which either suppress or enhance the growth of selected microorganisms. An effective amount of metal is sufficient low so that upon application of the composition to the soil toxic effects with respects to plants is avoided and is sufficiently high to affect the microorganisms in the vicinity of the plant roots. In general, an effective amount of metal is less than 1000 parts per million of the composition.

Basically, there are three types of microorganisms addressed:
1. Those that are detrimental to the plant tissue - these organisms are suppressed.
2. Those that are beneficial to the plants - these are enhanced.
3. Those that have been added to the soil by man to fight other disease organisms or to kill insects - these are also enhanced.
Nature has created a situation where the most harmful microorganisms do their greatest damage in the absence of air, i.e., in an anaerobic environment. It also happens that the beneficial organisms (of both class 2 and 3 above) require adequate oxygen. Thus, the oxygen releasing properties of the fertilizer formulations of this invention and of the metal peroxides, can act to cover all three points above.

Specifically, we have four types of ingredients in our formulations:
1. Oxygen releasing metal peroxides - these act to provide oxygen to select the beneficial microorganisms from the pathogenic microorganisms. This is a function in addition to the function discussed above, i.e., providing oxygen to the plant tissue.
2. Surfactant - these acts to improve the access of the soil to the oxygen, nutrients and trace metals in the formulation of this invention. It also helps control water transport.
3. Nutrients - basically the same N-P-K ingredients discussed above. These nutrients are not only beneficial to the plant but can also help maintain a desirable microorganism population.
4. Trace metals - the levels of various of these metal ions are effective in controlling the enzymatic secretions of the damaging microorganisms or enhancing the effects of the beneficial organisms. The trace metals can be added in such levels such that the predominant activity is on the microorganisms while the excess, not used in reacting with the microorganism's enzyme systems, can be beneficially used by the plants themselves.
Thus, the compositions of this invention and method of using such compositions has a dual effect: They aid the plants and they interact with microorganisms in the soil that help or hurt the plants. The microorganisms present in soil fall into several groupings, including bacteria, fungi (yeasts and molds) and algae.

Consider some of the bacterial diseases: Cornobacterium insidiosum cases alfalfa wilt; Xanthomonas malvagearum causes leaf spot in cotton; Xanthomonas stewartii causes wilt in corn; Erwinia tracheiphilia causes wilt in cucurbits, Xanthomonas phaseoli causes blight of beans; Xanthomonas campestris causes black rot of crucifers, Erwinia amyloyora causes fire blight in pome fruits; Streptomyces scabies causes potato scab; Cornebacterium sepedonicum causes ring rot in potato; Erwinia caratovara causes soft rot in cabbage, lettuce, potato (and other root vegetables); and Pseudomonas malvacearum causes wilt in cotton.

It has been found that metal peroxides, as evidenced by an experiment with magnesium peroxide, which can release at lease 15 mg of oxygen per gram of total formulated product controls Erwinia caratovara. This result can be extended to other species because the mechanism of action of the bacteria requires the lack of oxygen to begin the induction of the biochemicals that cause the damage. The addition of the other ingredients will enhance the effect either by benefitting the plant directly or enhancing the soil for the beneficial organisms to have a selective advantage.

In separate tests, zinc ion in the range of 1 to 10 ppm, in the presence of oxygen and surfactant, was found effective against damage caused by Cornebacterium species. It is hypothesized that the zinc interferes with enzyme systems used in the attack. Similar effects were found with Pseudomonas species.

This situation continues for the fungi. For example, Tathrina spp. causes leaf curl in peach, pear, oak, etc.; Glomerella cingulata causes bitter rot in apple, pear, grape; Nectria spp. and Erysiphe spp. causes mildew; Pythium spp. causes damping off and root rots; Rhizopus spp. and Tilletia spp. cause smut in oats, wheat, rye, barley, sorghum and corn; and Fusarium and Verticillium spp. cause wilt in many plants.

Mildew, damping off and root rots have been controlled in experiments with sensitive seedlings. A combination of the surfactants with the oxygen-releasing peroxides provided evidence of earlier and higher frequency of germination of seedlings with no evidence of these fungal diseases in geraniums, impatiens, petunias, marigolds and other bedding plants.

In addition, formulations containing copper in the range of 0.1-5 ppm are useful for control of many of the fungi, particularly Taphrina, Pythium, Tilletia, Ustiago and Fusarium. Copper salts are included in the formulation so that when applied dry to the soil and then watered, or when the formulation is diluted with water before application, 0.1 to 5 ppm of copper is delivered.

Certain unwanted algae are also sensitive to high levels of oxygen. It is expected that certain of these algae will also be controlled by applications of the product.

These applications are important since 10% of the crops are lost to disease. Because of this loss as well as an additional like loss to insects, microbial control of insects and diseases has been gaining recognition as a means of protecting crops. An introduction to this field is given by J. W. Deacon in the book, "Microbial Control of Plant Pests and Diseases," published by the American Society for Microbiology, Washington, D.C., 1983.

In this methodology, beneficial bacteria such as Bacillus thuringiensis or Bacillus popilliae are added to the soil. Various insect-pathogenic fungi are also in use such as Entomophthora spp., Beauveria bassiana, Metarhizium anisopliae and Hirsutella thompsonii.

These organisms benefit from an adequate supply of oxygen as well as the nutrients that can be provided by the formulation. In the case of these microorganisms, molybdenum, iron, cobalt and nickel are particularly useful in assisting the enzymatic functions that will attack the insect or specific disease organism.

In a similar manner, the natural fungi associated with plant roots, the so-called mycorrhizal fungi will benefit from the oxygen, metals, nutrients supplied by the formulations in aqueous carrier assisted to the soil area by the surfactant. These organisms include, but are not limited to, members of the species Pisolithus, Boletus, Cenococcum and Thelephora.

### Application Rates

It is difficult to determine the best way to state the levels of the various materials since there is a level in the formulation which, when diluted with water, provides an effective level in the aqueous phase. To define the situation a bit further, one should be aware that the materials accumulate in the tissues of either the plants or microorganisms due to the biochemical reactions involved.

To provide a simple example, copper may be used at an inclusion level of 0.1% in a formulation. If 15 grams (or one tablespoon) of this formulation were used in one gallon of water, one would have approximately 4 ppm in the application liquid. The rate in the solid would be much lower due to distribution of this material with aqueous layers already in the soil or due to subsequent irrigation. Typical nutrient levels for copper range from 0.02 ppm to 0.15 ppm in the liquid actually contacting the plant. When one analyzes the tissue of plants, one will find copper in the range of 4 to 17 ppm based on the dry weight of the plant.

It has been found that the application rate in the formulations should be such that it falls between the useful levels previously reported for nutrient solutions and below the inclusion level found in plant tissue. These levels, for the majority of plants, will not cause toxic effects in the plants, while the excess over the amounts required for nutrition of the plant will control (either retard or enhance) microbial enzymatic processes. In the example cited for copper, the inclusion rate of 0.1% would be the high end of the range with levels as low as 0.005% (which would provide 0.2 ppm in the solution) being useful.

Dissolving the formulation in water is only one method of application. Applying the formula dry and then watering it in is another. In this case, the rate of application of the formulation would be in the range of 1 to 10 pounds of fully formulated product per 1,000 square feet of soil.

In addition to the ranges specified in the earlier application, the surfactant can be as high as 1% of the product for these other uses and the trace elements will be in the range of 0.005% to 0.1% for copper; 0.001% to 0.05% for cobalt and nickel; 0.001% to 0.2% for molybdenum and aluminum; 0.01% to 0.4% for zinc; and 0.01% to 0.8% for manganese and iron. The surfactant range is 0.1% to 2.0% and the remainder of the ingredients are as discussed above.

### DESCRIPTION OF THE PREFERRED EMBODIMENTS

### Method of Making Fertilizer

In accordance with the method of making the fertilizer of this invention, the metal peroxide is first prepared in an aqueous solution. In general, the metal oxide, metal hydroxide, or metal carbonate is reacted with hydrogen peroxide to produce the metal peroxide. The reactions are generally non-stoichiometric. For example, magnesium peroxide could be prepared by one of the following three reactions:

MgO + H₂O₂ == MgO₂ + H₂O [1]

Mg(OH)₂ + H₂O₂ == MgO₂ + 2 H₂O [2]

MgCO₃ + H₂O₂ == MgO₂ + H₂O + CO₂ [3]

where
MgO₂ is magnesium peroxide
H₂O₂ is hydrogen peroxide
MgO is magnesium oxide, also called magnesia
H₂O is water
Mg(OH)₂ is magnesium hydroxide
MgCO₃ is magnesium carbonate
CO₂ is carbon dioxide gas

The magnesium oxide and hydrogen peroxide reaction is the preferred way to produce the magnesium peroxide utilized in this invention from the viewpoint of providing highest oxygen activity. The magnesium carbonate could be used as the starting material and it does not require cooling, but it is more costly. Any suitable source of magnesium oxide, commercial grade, is acceptable, preferably 200 to 400 mesh particles are used if the magnesium peroxide is to be dispersed in water. Particle size is not as important if the magnesium peroxide is to be applied in a dry form. The hydrogen peroxide is sold as a water solution containing from about 3 to 40 percent by weight of hydrogen peroxide. Typically, the commercial grade solution of hydrogen peroxide contains 30 to 35 percent of the hydrogen peroxide and this is the material utilized in the method of this invention. The reaction of magnesium oxide and hydrogen peroxide is exothermic and the temperature must be controlled so that excess heating does not occur. Moreover, water is removed after the reaction is completed to produce a dry product. The drying must be done in a manner which does not destroy the metal peroxide which, for example in the case of magnesium peroxide, decomposes at 375° C. In general, the heating process is controlled so that the temperature does not exceed 110° C. Temperature as low as 40° C with vacuum may also be used. The magnesium peroxide does not decompose in any significant quantities under such temperature conditions. It is important that the magnesium peroxide formed be maintained as a peroxide, so that the desired oxygen release characteristic is attained when applied to soil. The best way to make magnesium peroxide with the highest oxygen activity is to vacuum dry at the lowest possible temperature.

It is desirable during the production of the metallic peroxide that the maximum amount of metallic peroxide be produced. For example, magnesium peroxide if perfectly pure would contain 28.4 percent by weight oxygen for release. For calcium peroxide, the percent by weight oxygen is 22.2 percent. And for potassium peroxide, the percent by weight oxygen is 14.5 percent. Consequently, on a weight for weight basis none of the other natal peroxides match magnesium peroxide. Moreover, at equal levels of active oxygen, the magnesium peroxide will always have the lowest weight in the formulation. Used with the same concentrations, products using the potassium and calcium peroxide will not deliver as much active oxygen as products using the magnesium peroxide, since they cannot carry as much oxygen per unit weight. The metal peroxide does not, however, have to be perfectly pure. In accordance with this invention, the magnesium oxide is mixed with an aqueous solution of hydrogen peroxide to produce a metal peroxide having an acceptable purity so that it contains at least 15 percent by weight oxygen to be released to the soil.

Since the reaction between the magnesium oxide and hydrogen peroxide is exothermic, the temperature of the reaction must be controlled. This is accomplished by blending the hydrogen peroxide with the magnesium oxide in two steps. The aqueous hydrogen peroxide solution is divided approximately into equal portions. The magnesium oxide is slowly added to one of these portions, allowing the heat to dissipate slowly to avoid explosive or extremely ebullient reaction conditions occurring in the reaction vessel, which is a water-cooled, jacketed container. Magnesium oxide powder is added to the first portion at a rate to maintain the temperature of the reacting mixture at about 40° C, with vacuum. After all the magnesium oxide is added, the temperature of the reaction mixture is lowered to 35° C and then the balance of the aqueous hydrogen peroxide solution is slowly added with stirring and cooling to avoid an excessively high reaction temperature.

This aqueous slurry of magnesium peroxide, which consists of fine particles dispersed throughout the water, is then dried to produce a granular material. This can be accomplished by heating under vacuum, oven drying, or spray drying. It is desirable to control or regulate the rate at which oxygen is released so that the release occurs over a prolonged period of time. To accomplish this, a phosphate-containing material, which is not a condensed phosphate, i.e. a phosphate having at least one sequence of phosphorus-oxygen-phosphorus linkages in the molecule, is added to the aqueous medium before drying. The phosphate-containing material, in addition to regulating the rate at which oxygen is released, also provides the macronutrient phosphorus. The dried product containing the magnesium peroxide is then dry-blended with the other ingredients, for example urea, which provides the nitrogen, and ingredients containing potassium and other supplements such as trace minerals. When it is desirable to include the surfactant, the surfactant is added to the aqueous medium.

### EXAMPLES

The following presents several formulations of the fertilizer composition of this invention and the method of making these compositions.

### Example 1

To produce 56.3 grams of magnesium peroxide, 40.3 grams of magnesium oxide and 94 cubic centimeters of a 34 weight percent aqueous hydrogen peroxide solution are used. To ensure completeness of the reaction between the magnesium oxide and hydrogen peroxide, excess hydrogen peroxide, for example, approximately 150 cubic centimeters of the aqueous hydrogen peroxide is acceptable. This is divided into approximately two equal portions. The first portion, or 75 cubic centimeters, is placed in a water-jacketed reaction vessel and the powdered magnesium oxide is added slowly, keeping the temperature of the reaction ingredients at approximately 40° C. After all the magnesium oxide powder has been added to the reaction mixture, the temperature is lowered to 35° C and the second half of the hydrogen peroxide solution is added to the reaction vessel, with stirring and cooling to prevent the liquid reaction slurry from bubbling out of the reaction vessel. The liquid slurry produced is then dried by heating at a temperature of 90-110° C in an oven provided with vacuum to produce a fine granular powdery magnesium peroxide having a mesh size of approximately 325. It is important that the magnesium peroxide be in a highly powdered form so that if it is subsequently mixed with water it can be easily dispersed in the water, since neither magnesium peroxide nor the resulting magnesium oxide produced after release of oxygen is soluble in water. The magnesium peroxide is then dry blended with 131.4 grams of urea, 43.2 grams of potassium dihydrogen phosphate, and 50.7 grams of dipotassium hydrogen phosphate. This produces a fertilizer having a value of N-P-K of 20:15:15.

### Example 2

This example is similar to Example 1 in that essentially the same amounts of reagents are used. In this example the 43.2 grams of potassium is dry blended with the magnesium oxide prior to mixing with the hydrogen peroxide solution. The drying is conducted at 40° C under vacuum. A product with a higher oxygen activities is produced using the procedure of this example than produced in Example 1.

### Example 3

This example is essentially the same as example 1, except the potassium dihydrogen phosphate is added to the liquid slurry prior to drying.

### Example 4

This example is similar to that of Example 1 except the entire fertilizer formulation is formed in the aqueous blend. In this example, 40.3 grams of magnesium oxide are added with 43.2 grams of potassium dihydrogen peroxide, 50.7 grams of dipotassium hydrogen peroxide, 131.5 grams of urea, 0.3 grams of trace metals, and 0.3 grams of surfactant. In this example 200 cubic centimeters of hydrogen peroxide solution is used to keep the slurry fluid. The blend is dried at 80-100° C under vacuum.

### Example 5

This example is essentially the same as Example 2, except 0.3 gram of the surfactant monolaurate sorbitol ester is added to the aqueous slurry of the magnesium peroxide and potassium dihydrogen phosphate before drying.

### Example 6

This example is essentially the same as Example 1, except 0.3 gram of the surfactant is added to the aqueous slurry of magnesium peroxide without the addition of the phosphate compound. Upon drying, a powder is provided having a mesh size of 200. This powder may be dispersed readily in water and applied either directly to the soil or to seeds prior to planting.

### Example 7

To prepare 50 grams of calcium peroxide, 38.9 grams of calcium oxide and 38.3 grams of potassium dihydrogen phosphate is added to 54 milliliters of 34% hydrogen peroxide solution slowly to allow thorough reaction. After the mixing is complete another aliquot of 54 milliliters of the hydrogen peroxide solution is added slowly allowing the reaction to go to completion. To the aqueous slurry is added 0.3 gram of surfactant and the slurry is dried at 40° C in a vacuum. The dried material containing the phosphate stabilized calcium peroxide is then dried blended with 116.6 grams of urea, 45 grams of dipotassium hydrogen phosphate to provide a fertilizer with an N-P-K of 20:15:15.

### Example 8

To prepare 50 grams of potassium peroxide, 62.7 grams of potassium carbonate mixed with 38.3 grams of potassium dihydrogen phosphate and 0.3 gram of surfactant is added slowly to 70 milliliters of 34% hydrogen peroxide solution. The reaction is carried out inside a vacuum oven so that immediately after the reaction is completeed the mixture is dried at 40° C or less under high vacuum. The dry reaction product is dry blended with 116.6 grams of urea and 45 grams of dipotassium hydrogen phosphate to provide a fertilizer of N-P-K of 20:15:32.

### Example 9

Magnesium peroxide is produced by reacting 110 cc of 34% hydrogen peroxide with 40 grams of magnesium oxide for every 56 grams of magnesium peroxide desired in the presence of 4 grams of potassium dihydrogen phosphate. The reaction is carried out by first slurrying the magnesium oxide in 10 cc of the hydrogen peroxide solution and adding the remainder of the hydrogen peroxide after the initial heat has evolved from the reaction. The product of this reaction is filtered and dried at 85° C. This material can then be dry blended with the remainder of the ingredients. For each 100 grams of final product desired one mixes 14 grams of the previously prepared magnesium peroxide - potassium dihydrogen phosphate combination with 14 grams of Ca(H₂PO₄)₂, 1.5 grams of Fe₂(SO₄)₃, 0.4 grams of Cu(SO₄).H₂O, 0.6 grams of Mn(SO₄).4H₂O, 0.004 grams of Na₂MoO₄.H₂O, 0.25 grams of ZnSO₄.H₂O, 14.246 grams of additional potassium dihydrogen phosphate, 16 grams of KNO₃, and 39 grams of urea. The product is a high nitrogen fertilizer capable of quickly improving the quality of lawns and green plant.

### Example 10

The magnesium peroxide - potassium dihydrogen phosphate combination of this Example 10 is also a blended to form a high phosphorus product to enhance flower growth. In this composition 15 grams of the magnesium peroxide - potassium dihydrogen phosphate mix is blended with 3 additional grams of potassium dihydrogen phosphate and the same metal salts in the same amounts as in Example 9. In addition 0.1 grams of Al₂(SO₄)₃ is added along with 20n grams of KNO₃, 17 grams of urea, and 42.046 grams of Ca(H₂PO₄)₂.

### Typical Fertilizer Formulations

A wide variety of different formulations of fertilizers may be made utilizing the principles of this invention. The nominal percentages of the various macronutrients, micronutrients, and surfactant could be varied to provide fertilizers having formulations tailored to the specific plants and environments in which they are used. The ingredients of these formulations and typical weight ranges are as follows:

| Ingredient | Weight Percent |
|---|---|
| magnesium peroxide | 5-60 |
| potassium dihydrogen phosphate | 0-40 |
| dipotassium hydrogen phosphate | 0-40 |
| diammonium phosphate | 0-45 |
| potassium nitrate | 0-40 |
| ammonium nitrate | 0-50 |
| urea | 0-60 |
| trace metals | 0.0-5.0 |
| surfactants | 0.0-0.2 |

The preferred fertilizers of this invention have the following compositions:
Fertilizer I:
   from 10 to 25 weight percent magnesium peroxide,
   from 10 to 25 weight percent potassium dihydrogen phosphate,
   from 15 to 25 weight percent dipotassium hydrogen phosphate,
   from 40 to 60 weight percent urea,
   from 0 to 2.0 weight percent trace metals, and
   from 0 to 0.2 weight percent surfactant.
Fertilizer II:
   from 10 to 25 weight percent magnesium peroxide,
   from 30 to 50 weight percent diammonium phosphate,
   from 15 to 30 weight percent potassium nitrate,
   from 15 to 25 weight percent urea,
   from 0 to 2.0 weight percent trace metals, and
   from 0 to 0.2 weight percent surfactant.
Fertilizer III:
   from 10 to 25 weight percent magnesium peroxide,
   from 30 to 45 weight percent diammonium phosphate,
   from 5 to 30 weight percent potassium nitrate,
   from 15 to 50 weight percent ammonium nitrate,
   from 0 to 2.0 weight percent trace metals, and
   from 0 to 0.2 weight percent surfactant.
Typical formulations are as follows:

### Formulation A

| | |
|---|---|
| 19.96% | magnesium peroxide |
| 15.30% | potassium dihydrogen phosphate |
| 17.96% | dipotassium hydrogen phosphate |
| 46.57% | urea |
| 0.1% | trace metals |
| 0.1% | surfactant |

The above Formulation A is based upon employing chemical quality ingredients and the nominal percentages may vary slightly as a consequence. The magnesium peroxide could be as low as 5 percent in the above formulation and still provide oxygen release. In fertilizers were a very high oxygen release is required, such as tuber protection, the above formulation may contain as much as 50 percent magnesium peroxide. The above Formulation A gives an N-P-K value of 21.74-15.30-15.01, with the P expressed as P₂O₅ and K expressed as K₂O. The potassium dihydrogen phosphate appears to be slightly preferred when it is desired that the product release oxygen over a one to two week period. Thus, it may be desirable to employ only this phosphate and not a mixture of the potassium dihydrogen phosphate and the dipotassium hydrogen phosphate. Either or both of these phosphates are added during the preparation of the magnesium peroxide as is the surfactant. If the magnesium peroxide is made by reacting magnesium oxide with aqueous hydrogen peroxide as illustrated in Example 1, Formulation A has been shown to release 48 milligrams of oxygen per gram of fertilizer material blended with a gallon of water. However, even if the magnesium peroxide was in an impure state, for example, only 15 percent of the weight of oxygen in the reaction mix, such a material when used in Formulation A would still provide oxygen release of 30 milligrams of oxygen per gram of fertilizer. Thus, if there is an incomplete reaction during the manufacture of the magnesium peroxide, or over-drying, the fertilizer product will still have the desired oxygen release property.

### Formulation B

It has been found that the magnesium peroxide concentration could be as low as about 11 percent if the magnesium peroxide contains 25 weight percent active oxygen and the oxygen release would still be maintained at about 26 milligrams atomic oxygen per gram of fertilizer. The following Formulation B illustrates such a product.

| | |
|---|---|
| 11.74% | MgO₂ |
| 18.34% | KH₂PO₄ |
| 18.34% | K₂HPO₄ |
| 51.36% | urea |
| 0.11% | trace metals |
| 0.11% | surfactant |

Formulation B has a N-P-K value of 23.98:17.04:16.27.

### Formulation C

The following Formulation C provides magnesium peroxide at an active oxygen concentration of 15 percent.

| | |
|---|---|
| 19.96% | magnesium peroxide |
| 38.26% | diammonium phosphate |
| 21.62% | potassium nitrate |
| 19.96% | urea |
| 0.1% | trace metals |
| 0.1% | surfactant |

Formulation C is a less expensive fertilizer. Again the diammonium phosphate is added to the magnesium peroxide prior to drying. Diammonium phosphate is slightly hygroscopic and needs to be protected from moisture pick up. Mixing the magnesium peroxide and the diammonium phosphate before drying does prevent water pick up. Formulation C nominally has an N-P-K value of 20.43:20.56:20.15.

### Formulation D

Formulation D is based upon the magnesium oxide being present at least 25 percent active oxygen purity. The amount of peroxide may be reduced to provide 26 milligrams of oxygen per gram of fertilizer. Formulation D is:

| | |
|---|---|
| 11.74 % | magnesium peroxide |
| 42.19% | diammonium phosphate |
| 23.84% | potassium nitrate |
| 22.01% | urea |
| 0.1% | trace metals |
| 0.1% | surfactant |

The N-P-K value for this Formulation D is 22.53:22.67:22.22.

### Formulation E

When the active oxygen is as low as 15%

| | |
|---|---|
| 19.96% | magnesium peroxide |
| 38.26% | diammonium phosphate |
| 21.62% | potassium nitrate |
| 19.96% | ammonium nitrate |
| 0.1% | trace metals |
| 0.1% | surfactant |

The N-P-K value for this Formulation E is 18.11:20.56:20.15.

### Formulation F

When the active oxygen is greater than 25%

| | |
|---|---|
| 11.74% | magnesium peroxide |
| 42.19% | diammonium phosphate |
| 23.84% | potassium nitrate |
| 22.01% | ammonium nitrate |
| 0.11% | trace metals |
| 0.11% | surfactant |

The N-P-K value for this Formulation F is 19.97:22.67:22.22.

### Formulation G

When the active oxygen is at least 15%

| | |
|---|---|
| 17.96% | magnesium peroxide |
| 33.27% | potassium dihydrogen phosphate |
| 6.65% | potassium nitrate |
| 41.92% | ammonium nitrate |
| 0.1% | trace metals |
| 0.1% | surfactant |

The N-P-K value for this Formulation G is 15.61:17.35:17.71.

### Formulation H

When the active oxygen is at least 25%

| | |
|---|---|
| 11.49% | magnesium peroxide |
| 35.89% | potassium dihydrogen phosphate |
| 7.18% | potassium nitrate |
| 45.23% | ammonium nitrate |
| 0.11% | trace metals |
| 0.11% | surfactant |

The N-P-K value for this Formulation G is 16.84:18.72:19.11.

### TEST RESULTS

The above formulations were tested for oxygen release. When mixed with water, Formulation A and B provided more oxygen and for longer periods of time than the the Boghosian product. When phosphate was added to fertilizer, the rate of release of oxygen was slower and extended for longer periods of time than when the phosphate was absent. Fertilizers of this invention have been used with a wide variety of plants and demonstrated to be effective fertilizers. In comparison testing with other products, the fertilizers of this invention produced better or comparable results even when used at significantly lower dosage levels.

## Claims

1. A method of making a fertilizer composition comprising:
(A) forming a metal peroxide by reacting a metal oxide, a metal hydroxide, or a metal carbonate with an aqueous solution of hydrogen peroxide in the presence of a source of phosphate ion provided that the source of phosphate ions is not a condensed phosphate, i.e. a phosphate having at least one sequence of phosphorus-oxygen-phosphorus linkages in the molecule; and
(B) drying the product produced from step (A) without decomposing it to remove the water therefrom and provide a granular fertilizer composition.

2. The method of Claim 1 wherein the source of phosphate ion is potassium dihydrogen phosphate, dipotassium hydrogen phosphate, urea phosphate, monoammonium phosphate, diammonium phosphate, or a mixture thereof.

3. The method of Claim 1 or 2, wherein said aqueous solution of hydrogen peroxide is divided into approximately equal portions with the metal oxide being added slowly to only one portion to maintain the temperature of the reaction mixture within the range of 25° to 40° C.

4. The method of Claim 3, additionally comprising, prior to step (3), adjusting the temperature of the reaction mix in step (A) so that it is less than about 35° and adding slowly to the reaction mixture the second portion of the aqueous hydrogen peroxide solution, said aqueous solution of hydrogen peroxide being added slowly to the reaction mixture of step (A).

5. The method according to any one of Claims 1 to 4, additionally comprising adding a surfactant which is non-toxic to plants to the reaction mixture of step (A).

6. The method according to any one of Claims 1 to 5, additionally comprising dry-blending the dried product produced after step (b) with other ingredients.

7. The method of Claim 6, wherein said other ingredients comprise ingredients selected from tne group consisting of a source of nitrogen, a source of phosphorus, a source of potassium, trace minerals, and mixtures thereof.

8. The method according to any one of Claims 1 to 7, wherein said metal peroxide is magnesium peroxide and wherein step (A) comprises reacting magnesium oxide with an aqueous solution of hydrogen peroxide.

9. A fertilizer composition produced by the method of any one of the preceding claims.

10. A composition accorcing to Claim 9, wherein said composition is capable of releasing at least 15 milligrams of oxygen per gram of composition.

11. A composition according to Claim 9, wherein said composition additionally includes at least one of the following metals: zinc, copper, molybdenum, boron, selenium, cobalt, aluminum, manganese, iron or nickel.

12. A composition according to Claim 11, wherein the effective amount of metal is less than 1000 parts per million of the composition.

13. A composition according to any one of Claims 9 to 12, including a surfactant which is non-toxic to plants.

14. A composition according to Claim 13, wherein the surfactant is present in an amount of from 0.005 to 0.010 grams of surfactant per gram of peroxide.

15. A composition according to Claim 13 or 14, wherein the surfactant is one of the following:
(a) long chain alcohol ethoxylate sulfates of the formula
RO-(CH₂CH₂O)ₙ-SO₃Na
where R is C₁₂ to C₁₈ and n is less than or equal to 10;
(b) long chain acyl taurides of the formula
RCON(CH₃)C₂H₄SO₃Na
where R is C₁₄ to C₂₀; or
(c) long chain ethoxylated alcohols of the formula
RO - (CH₂CH₂O)ₙ-H
where R is C₁₄ to C₂₀ and n is less than of equal to 10.

16. A composition according to any one of Claims 9 to 15, wherein the surfactant comprises at least one of the following compounds: a monolaurate, monopalmitate, monostearate or monooleate, wherein said compound is ethoxylated or monoethoxylated.

17. Use of a composition according to any one of claims 9 to 16 as a fertilizer.

## Patentansprüche

1. Verfahren zur Herstellung einer Düngemittelzusammensetzung, umfassend:
(A) Herstellen eines Metallperoxids durch Umsetzen eines Metalloxids, eines Metallhydroxids oder eines Metallcarbonats mit einer wäßrigen Wasserstoffperoxidlösung in Gegenwart einer Phosphationenquelle, mit der Maßgabe, daß die Phosphationenquelle kein kondensiertes Phosphat ist, d.h. ein Phosphat mit mindestens einer Sequenz Phosphor-Sauerstoff-Phosphorbindungen im Molekül, und
(B) Trocknen des in Schritt (A) hergestellten Produkts ohne es zu zersetzen, um Wasser daraus zu entfernen und, um eine granulierte Düngemittelzusammensetzung zu erhalten.

2. Verfahren gemäß Anspruch 1, wobei die Phosphationenquelle Kaliumdihydrogenphosphat, Dikaliumhydrogenphosphat, Harnstoffphosphat, Monoammoniumphosphat, Diammoniumphosphat, oder ein Gemisch hiervon ist.

3. Verfahren gemäß Anspruch 1 oder 2, wobei die wäßrige Wasserstoffperoxidlösung in ungefähr gleiche Teile aufgeteilt wird und das Metalloxid langsam zu einem dieser Teile gegeben wird, um die Temperatur der Reaktionsmischung in dem Bereich zwischen 25 und 40°C zu halten.

4. Verfahren gemäß Anspruch 3, wobei zusätzlich vor dem Schritt (B) die Temperatur der Reaktionsmischung in Schritt (A) auf weniger als ungefähr 35°C eingestellt wird und der zweite Teil der wäßrigen Wasserstoffperoxidlösung langsam zu der Reaktionsmischung gegeben wird, wobei die wäßrige Wasserstoffperoxidlösung langsam zu der Reaktionsmischung des Schrittes (A) gegeben wird.

5. Verfahren gemäß einem der Schritte 1 bis 4, zusätzlich umfassend die Zugabe eines Tensids, welches für Pflanzen ungiftig ist, zu der Reaktionsmischung des Schrittes (A).

6. Verfahren gemäß einem der Ansprüche 1 bis 5, zusätzlich umfassend trockenes Mischen des getrockneten Produktes, das nach dem Schritt (B) erhalten wird, mit anderen Zutaten.

7. Verfahren gemäß Anspruch 6, wobei die anderen Zutaten ausgewählt werden aus einer Stickstoffquelle, einer Phosphorquelle, einer Kaliumquelle, Spurenmineralien und Mischungen hiervon.

8. Verfahren gemäß einem der Schritte 1 bis 7, wobei das Metallperoxid Magnesiumperoxid ist und wobei Schritt (A) die Reaktion von Magnesiumoxid mit einer wäßrigen Wasserstoffperoxidlösung umfaßt.

9. Düngemittelzusammensetzung, hergestellt nach einem Verfahren gemäß einem der vorstehenden Ansprüche.

10. Zusammensetzung gemäß Anspruch 9, wobei die Zusammensetzung mindestens 15 mg Sauerstoff pro g Zusammensetzung freisetzen kann.

11. Zusammensetzung gemäß Anspruch 9, wobei die Zusammensetzung zusätzlich mindestens eines der folgenden Metalle enthält: Zink, Kupfer, Molybdän, Bor, Selen, Kobalt, Aluminium, Mangan, Eisen oder Nickel.

12. Zusammensetzung gemäß Anspruch 11, wobei der effektive Metallgehalt weniger als 1000 Teile pro Million Teile der Zusammensetzung beträgt.

13. Zusammensetzung gemäß einem der Ansprüche 9 bis 12, umfassend ein Tensid, welches für Pflanzen ungiftig ist.

14. Zusammensetzung gemäß Anspruch 13, wobei die Menge des Tensids zwischen 0,005 und 0,010 g Tensid pro g Peroxid beträgt.

15. Zusammensetzung gemäß Anspruch 13 oder 14, wobei das Tensid eines der folgenden ist:
(a) ein langkettiges Alkoholethoxylatsulfat der folgenden Formel
RO-(CH₂CH₂O)ₙ-SO₃Na
wobei R C₁₂ bis C₁₈ ist und n höchstens 10 ist;
(b) ein langkettiges Acyltaurid der Formel
RCON(CH₃)C₂H₄SO₃Na
wobei R C₁₄ bis C₂₀ ist; oder
(c) ein langkettiger ethoxylierter Alkohol der Formel
RO-(CH₂CH₂O)ₙ-H
wobei R C₁₄ bis C₂₀ ist und n höchstens 10 ist.

16. Zusammensetzung gemäß einem der Ansprüche 9 bis 15, wobei das Tensid mindestens eine der folgenden Verbindungen umfaßt: Monolaurat, Monopalmitat, Monostearat oder Monooleat, wobei die Verbindung ethoxyliert oder nichtethoxyliert ist.

17. Verwendung einer Zusammensetzung, gemäß einem der Ansprüche 9 bis 16 als Düngemittel.

## Revendications

1. Procédé de fabrication d'une composition d'engrais comprenant les étapes consistant:
(A) à former un peroxyde métallique en faisant réagir un oxyde métallique, un hydroxyde métallique ou un carbonate métallique avec une solution aqueuse de peroxyde d'hydrogène en présence d'une source d'ion phosphate à condition que la source d'ions phosphate ne soit pas un phosphate condensé, à savoir, un phosphate ayant au moins une séquence de liaisons phosphore-oxygène-phosphore tans la molécule; et
(B) à sécher le produit obtenu à partir de l'étape (A) sans le décomposer pour éliminer l'eau de celui-ci et fournir une composition d'engrais granuleuse.

2. Procédé selon la revendication 1, dans lequel la source d'ion phosphate est le dihydrogénophosphate de potassium, l'hydrogénophosphate de dipotassium, le phosphate d'urée, le phosphate de monoammonium, le phosphate de diammonium ou un de leurs mélanges.

3. Procédé selon la revendication 1 ou 2, dans lequel ladite solution aqueuse de peroxyde d'hydrogène est divisée en portions approximativement égales, l'oxyde métallique étant ajouté lentement en une seule portion pour maintenir la température du mélange réactionnel dans la gamme de 25°C à 40°C.

4. Procédé selon la revendication 3, comprenant de plus, avant l'étape (B), les étapes consistant à ajuster la température du mélange réactionnel dans l'étape (A) de façon qu'elle soit inférieure à environ 35°C et à ajouter lentement au mélange réactionnel la deuxième portion de la solution aqueuse de peroxyde d'hydrogène, ladite solution aqueuse de peroxyde d'hydrogène étant ajoutée lentement au mélange réactionnel de l'étape (A).

5. Procédé selon l'une quelconque des revendications 1 à 4, comprenant de plus l'étape consistant à ajouter un tensio-actif qui est non toxique envers les plantes au mélange réactionnel de l'étape (A).

6. Procédé selon l'une quelconque des revendications 1 à 5, comprenant de plus l'étape consistant à mélanger à sec le produit séché obtenu après l'étape (b) avec d'autres ingrédients.

7. Procédé selon la revendication 6, dans lequel lesdits autres ingrédients comprennent des ingrédients choisis dans le groupe formé par une source d'azote, une source de phosphore, une source de potassium, des oligo-minéraux et leurs mélanges.

8. Procédé selon l'une quelconque des revendications 1 à 7, dans lequel ledit peroxyde métallique est le peroxyde de magnésium et dans lequel l'étape (A) consiste à faire réagir l'oxyde de magnésium avec une solution aqueuse de peroxyde d'hydrogène.

9. Composition d'engrais produite par le procédé selon l'une quelconque des revendications précédentes.

10. Composition selon la revendication 9, dans laquelle ladite composition est capable de libérer au moins 15 milligrammes d'oxygène par gramme de composition.

11. Composition selon la revendication 9, dans laquelle ladite composition inclut de plus au moins un des métaux suivants: le zinc, le cuivre, le molybdène, le bore, le sélénium, le cobalt, l'aluminium, le manganèse, le fer ou le nickel.

12. Composition selon la revendication 11, dans laquelle la quantité efficace de métal est inférieure à 1 000 parties par million de la composition.

13. Composition selon l'une quelconque des revendications 9 à 12, incluant un tensio-actif qui est non toxique envers les plantes.

14. Composition selon la revendication 13, dans laquelle le tensio-actif est présent à raison de 0,005 à 0,010 gramme de tensio-actif par gramme de peroxyde.

15. Composition selon la revendication 13 ou 14, dans laquelle le tensio-actif est l'un des composés suivants:
(a) les alcool-éthoxylate-sulfates à longue chaîne de formule:
RO-(CH₂CH₂O)ₙ - SO₃Na
où R est en C₁₂ à C₁₈ et n est inférieur ou égal à 10;
(b) les taurures d'acyle à longue chaîne de formule:
RCON(CH₃)C₂H₄SO₃Na
où R est en C₁₄ à C₂₀; ou
(c) les alcools éthoxylés à longue chaîne de formule
RO - (CH₂CH₂O)ₙ-H
où R est en C₁₄ à C₂₀ et n est inférieur ou égal à 10.

16. Composition selon l'une quelconque des revendications 9 à 15, dans laquelle le tensio-actif comprend au moins un des composés suivants: un monolaurate, monopalmitate, monostéarate ou monooléate, dans lequel ledit composé est éthoxylé ou non éthoxylé.

17. Utilisation d'une composition selon l'une quelconque des revendications 9 à 16 en tant qu'engrais.
